# EUROPEAN PATENT APPLICATION

(11) **EP 2 472 762 A2**
(43) Date of publication of application: **04.07.2012**
(21) Application number: 10825200.8
(22) Date of filing: 20.10.2010
(51) Int. Cl.: H04L 1/18

(54) **METHOD FOR ALLOCATING FIXED RESOURCE IN BROADBAND WIRELESS COMMUNICATION SYSTEM**

(30) Priority: 20.10.2009 US 253082 P; 02.09.2010 US 379396 P; 20.10.2010 KR 20100102459
(71) Applicant: LG Electronics Inc., Seoul 150-721 (KR)
(72) Inventor: KIM, Jeongki, Gyeonggi-Do 431-080 (KR); KANG, Seunghyun, Gyeonggi-Do 431-080 (KR); RYU, Kiseon, Gyeonggi-Do 431-080 (KR); YUK, Youngsoo, Anyang Gyeonggi-Do 431-080 (KR)
(74) Representative: Cabinet Plasseraud
(86) International application number: PCT/KR2010/007209
(87) International publication number: WO 2011/049375

(57) **Abstract**

An operating method of a base station for error handling in persistent allocation of the present invention comprises the steps of: a terminal transmitting a first control message including persistent allocation information for transmitting an uplink data burst thereto; decoding the uplink data burst in a resource region allocated through the first control message; and determining whether the terminal receives the first control message on the basis of the decoding result.

## Description

### TECHNICAL FIELD

The present disclosure relates to a persistent allocation in a broadband wireless communication system, and more particularly, error handling in a persistent allocation.

### BACKGROUND ART

VoIP traffic is characterized in being generated in a fixed size having a fixed cycle in VoIP codec. VoIP communication can be divided into a talk spurt, in which a call is in progress between users, and a silence period in which a user does not talk but listens to. And, the silence period occupies a normal call session over 50%.

In order to allocate a bandwidth differing in size to each of the talk spurt and the silence period, various types of codec are used. And, a representative one of the various types of codec is AMR (adaptive multi-rate) used by Global System for Mobile communication (GSM) and Universal Mobile Telecommunication System (UMTS).

Since voice data is not generated in the silence period, if a bandwidth is allocated to the silence period, resources can be wasted. To prevent this, VoIP supports silence suppression. According to the silence suppression, a vocoder for generating VoIP traffic does not generate traffic during the silence period but periodically generates comfort noise to inform a counterpart user that a call keeps being maintained. For example, the vocoder using the AMR codec generates a packet having a fixed size in the call spurt once per 20 ms and generates the comfort noise per 160 ms.

In order to perform resource allocation for traffic in a fixed size having a fixed cycle (period) such as VoIP, a base station generally uses a method of persistently (fixedly) allocating (assigning) a predetermined region to a specific terminal. That is, the base station may allocate the region as large as the initially-defined size to the terminal which is capable of supporting the VoIP service. The base station may also inform the terminal of the allocated resource region information through a control channel or a control message (for example, UL-MAP or DL-MAP), which is initially transmitted. Accordingly, the control channel or control message, which is initially transmitted, may also include period information relating to the next allocation region.

From the next period, the base station may continuously allocate a region without any specified notification associated with the corresponding region which has been informed to the terminal using the initially-transmitted control channel or control message. Therefore, the terminal transmits the VoIP packet to the allocated region using region information which has been initially allocated on the map, and transmits the VoIP packet from the following period to the same region using period information.

Meanwhile, when a frame length is ser to 5 ms in consideration of the VoIP service and a frame period assigned to the terminal for VoIP packet transmission is set to 4 frames, the frame period assigned to the terminal for the VoIP packet transmission may depend on service characteristics. Especially, even for the same VoIP service, the frame period allocated for the VoIP packet transmission may be defined in different ways according to individual elements, such as system characteristic (for example, a system characteristic according to the frame length), VoIP service status (for example, a talk spurt period or a silence period), and the like.

The base station located at an initial frame informs the terminal of the allocation region information to transmit the VoIP packet through UL-MAP. Afterwards, at a fourth or eighth frame corresponding to each period, the base station does not inform the region information via the UL-MAP and allocates only the region for the VoIP packet transmission.

Here, the period allocated for the VoIP packet transmission is 4 frames (i.e., 20 ms). That is, the terminal may store region allocation information included in the UL-MAP received from the initial frame, and then transmit a VoIP packet via a corresponding region although the UL-MAP is not additionally received from the fourth and eighth frames corresponding to the allocation period. As such, the base station is fixed to a single VoIP connection due to the VoIP traffic characteristic and can persistently allocate resources to this VoIP connection.

Hereinafter, description will be given of an error handling procedure when a terminal or a base station performs a persistent or continuous packet transmission, especially, in a packet transmission method and a resource allocation method for VoIP service.

### Error Handling Procedure

In a persistent (continuous, fixed) allocation method, if a terminal fails to receive a map (for example, DL/UL PA A-MAP) including persistent allocation information, a terminal cannot be normally allocated with a persistent (continuous, fixed) resource from a base station. Hence, the base station should confirm whether or not the terminal has successfully received the map for allocating the persistent resource. When carrying out a persistent allocation in a general system, the following methods are employed to confirm whether or not the terminal has successfully received the map.

### Downlink Persistent Allocation

First of all, in a downlink persistent (fixed, continuous) allocation, when an allocation for an initial downlink data burst is performed, the base station transmits a map for persistent allocation (for example, DL PA A-MAP) to the terminal, and then transmits a downlink data burst to a region indicated by the map. Here, the terminal may transmit a HARQ ACK/NACK to the base station via a HARQ feedback channel in response to the downlink data burst received from the base station.

Here, the base station determines that the terminal has successfully received the map when receiving an ACK or NACK via the HARQ feedback channel.

However, when failed to receive the ACK or NACK via the corresponding channel, the base station determines the MAP reception of the terminal as failed, so as to retransmit the MAP to the terminal.

### Uplink Persistent Allocation

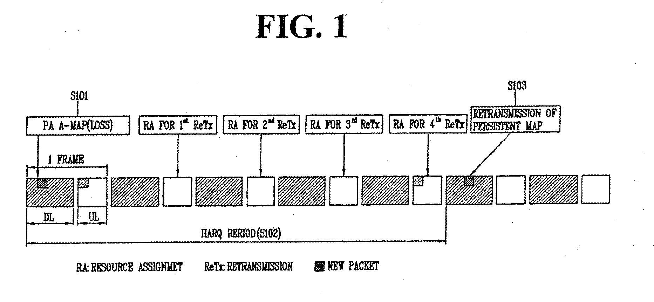

FIG. 1 shows a typical procedure for error handling when performing an uplink persistent allocation.

For the uplink persistent allocation, the base station transmits an uplink persistent allocation map (for example, UL Persistent Advanced-MAP Information Element (UL persistent A-MAP IE)) to the terminal (S101).

When failed to receive an uplink data packet, which the terminal transmits to a region indicated by the UL PA A-MAP, within a HARQ period (S102), the base station determines that the terminal has failed to receive the UL PA A-MAP and retransmits the UL PA A-MAP to the terminal (S103). Here, the HARQ period indicates a time corresponding to the maximum number of HARQ packet retransmissions.

However, for error handling with respect to an uplink resource allocation, when the terminal fails to receive the uplink resource allocation map (UL persistent A-MAP) transmitted by the base station due to a bad channel condition or other regions, then the base station waits for success or failure of decoding for an uplink data burst until the end of the HARQ period.

Here, when a long HARQ retransmission period is set (for example, when the maximum number of retransmissions is four), uplink resources are wasted four times due to a retransmission region allocation except for an initial transmission, and the terminal is unable to acquire the persistent allocation until the end of the HARQ period. Consequently, the terminal is not able to transmit a new packet generated in the next period.

Also, if a UL basic assignment MAP for retransmission of the uplink data burst is not transmitted, the terminal is unable to transmit even the first packet within the HARQ period.

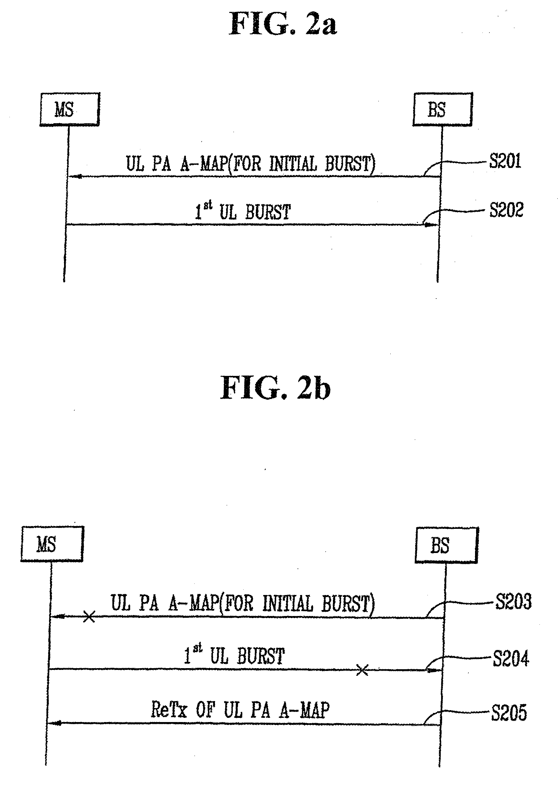

FIG. 2A shows an example in which it is determined that the terminal has received a UL PA A-MAP when the base station detects an uplink data burst (hereinafter, referred to as 'UL burst') in a region indicated by the UL PA A-MAP.

The base station transmits UL PA A-MAP to the terminal (S201). When the UL PA A-MAP has successfully been received, the terminal transmits a UL burst to the region indicated by the UL PA A-MAP.

When the base station detects the UL burst, transmitted from the terminal, in the region indicated by the UL PA A-MAP, it determines that the terminal has successfully received the UL PA A-MAP (S202).

That is, the base station may detect whether or not the UL burst has been transmitted to the region indicated by the UL PA A-MAP, so as to determine whether the terminal has successfully received the UL PA A-MAP.

That is, when the base station detects the UL burst transmitted to the region indicated by the UL PA A-MAP after transmitting the UL PA A-MAP to the terminal, the base station determines that the terminal has successfully received the UL PA A-MAP.

However, when it fails to detect the UL burst transmitted to the region indicated by the UL PA A-MAP, the base station determines that the terminal has failed to receive the UL PA A-MAP.

Here, the detection of the base station with respect to transmission or non-transmission of the UL burst may be measured using a strength of a signal transmitted to the region indicated by the UL PA A-MAP.

FIG. 2B shows retransmission of the UL PA A-MAP to the terminal when the base station fails to detect the transmission of the UL burst in the region indicated by the UL PA A-MAP.

Referring to FIG. 2B, after transmission of the UL PA A-MAP to the terminal (S203), when the base station fails to detect transmission of the UL burst from the terminal in the region indicated by the UL PA A-MAP, the base station determines that the terminal has failed to receive the UL PA A-MAP (S204). Here, cases where the base station fails to detect the UL burst may include a bad channel condition, the terminal failing to receive the UL PA A-MAP transmitted by the base station due to other reasons, or the loss of the UL burst transmitted by the terminal on a wired or wireless link.

Here, the base station retransmits the UL PA A-MAP to the terminal (S205). Upon reception of the retransmitted UL PA A-MAP, the terminal transmits the UL burst to the base station.

However, in FIGS. 2A and 2B, when the base station determines whether or not the terminal has received the UL PA A-MAP based on the UL burst, the base station may erroneously determine that the terminal has transmitted the UL burst, even if the terminal has not transmitted the UL burst, due to an interference signal generated due to transmission of another terminal belonging to a neighboring base station. In this case, the base station, as shown in FIG. 1, allocates wrong UL resources to the terminal during the HARQ period.

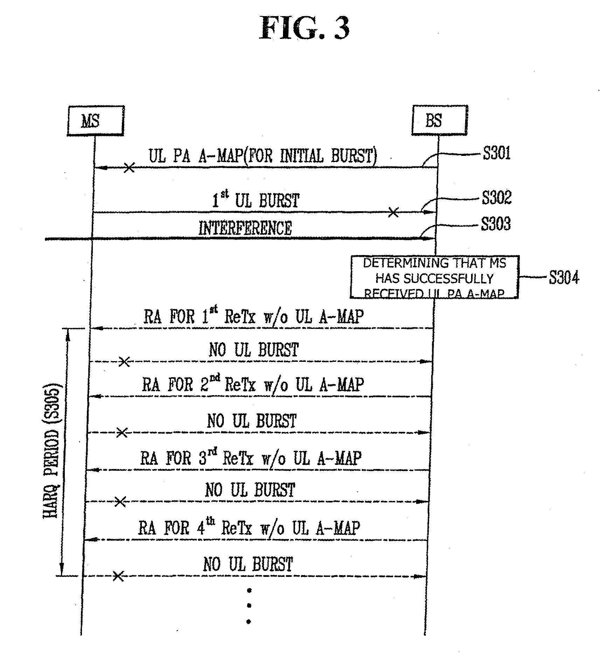

FIG. 3 shows an example that the base station erroneously determines that the terminal has received the UL PA A-MAP when receiving a UL burst due to an external interference signal in the region indicated by the UL PA A-MAP.

After the base station transmitted the UL PA A-MAP (for example, UL individual persistent A-MAP or UL composite persistent A-MAP) to the terminal for allocating a UL persistent resource (S301), when the terminal has failed to receive the MAP, the terminal is unable to transmit a UL burst using the resource allocated through the MAP (S302).

However, the base station may receive UL bursts from other terminals belonging to the same or different base stations in the region indicated by the UL PA A-MAP (S303).

Here, the base station determines that the terminal has transmitted the burst due to an interference signal from the other terminals, namely, determines that the terminal has successfully received the UL PA A-MAP (S304).

In this case, the base station fails to decode the UL burst, so it continuously allocates the UL resource for retransmission to the terminal while performing a HARQ retransmission process with respect to the UL burst (S305). The terminal then fails to acquire persistent resource information allocated by the base station.

### DISCLOSURE OF THE INVENTION

Therefore, to obviate those problems, an aspect of the detailed description is to provide a method for determining whether a terminal has received a DL/UL PA MAP message using results of detection and decoding in a persistent allocation scheme.

Another aspect of the detailed description is to provide a method for determining whether a terminal has received a UL PA MAP message when a UL basic assignment MAP message is transmitted during a HARQ retransmission for a UL burst.

To achieve these and other advantages and in accordance with the purpose of the present invention, as embodied and broadly described herein, there is provided an operating method of a base station for error handling in a persistent allocation, the method including transmitting, to a terminal, a first control message including persistent allocation information for the terminal to transmit an uplink data burst thereto, decoding the uplink data burst in a resource region allocated through the first control message, and determining whether the terminal receives the first control message on the basis of the decoding result.

The method may further include performing detection for the uplink data burst in the resource region allocated through the first control message when the decoding has failed.

The method may further include retransmitting the first control message to the terminal by determining that the terminal has failed to receive the first control message upon failure of the detection.

The method may further include performing a Hybrid Automatic Repeat reQuest (HARQ) retransmission process for the uplink data burst when the detection is successful.

The method may further include determining that the terminal has failed to receive the first control message when the number of HARQ retransmissions exceeds the maximum number of retransmissions, and retransmitting the first control message to the terminal.

It may be determined that the terminal has received the first control message when the decoding for the uplink data burst is successful during the HARQ retransmission process without transmitting a second control message, which includes information related to the change in a resource region for retransmission, to the terminal.

The method may further include performing a HARQ retransmission process for the uplink data burst when the decoding fails.

The method may further include transmitting the second control message including information related to a changed resource allocation region to the terminal when the resource allocation region for retransmission of the uplink data burst changes during the HARQ retransmission process.

The method may further include retransmitting the first control message to the terminal when the decoding for the uplink data burst is successful in the changed resource allocation region.

The retransmitted first control message may be retransmitted to the terminal at a timing of allocating a resource for the terminal to transmit the next uplink data burst.

The method may further include determining that the terminal has failed to receive the first control message when decoding for first and second uplink data bursts all fails in the resource region allocated through the first control message, and retransmitting the first control message to the terminal at a timing of transmitting a third uplink data burst.

The detection step may be performed to compare a preset threshold value with a strength of a signal received in the allocated resource region and determine whether or not the uplink data burst has been transmitted to the allocated resource region.

The first control message may be an uplink persistent allocation A-MAP IE.

The second control message may be an uplink basic assignment A-MAP IE.

In accordance with another exemplary embodiment of this specification, there is provided an operating method of a base station for error handling in a persistent allocation, the method including transmitting a first control message to a terminal, the first control message including persistent allocation information for the terminal to receive a downlink data burst, transmitting the downlink data burst to the terminal using the resource allocated through the first control message, and determining that the terminal has failed to receive the transmitted first control message when an ACK for the transmitted downlink data burst is not received, and retransmitting the first control message to the terminal at the next downlink persistent allocation period.

The first control message may be an uplink persistent allocation A-MAP IE.

In accordance with another exemplary embodiment of this specification, there is provided an operating method of a terminal for error handling in a persistent allocation, the method including receiving a first control message from a base station for transmitting an uplink data burst, the first control message including persistent allocation region information, re-receiving the first control message from the base station, and updating the persistent allocation region information included in the previously received first control message, using the re-received first control message.

### ADVANTAGEOUS EFFECT

In accordance with the detailed description, error handling may be carried out in a persistent allocation using at least one of power detection and decoding with respect to a downlink or uplink data burst, thereby reducing unnecessary resource waste for a persistent allocation and more fast recovering an error for a DL/UL PA A-MAP.

Also, a false alarm problem which may be caused in a burst detection can be addressed by use of a burst decoding.

In addition, when a UL burst decoding by a UL basic assignment A-MAP IE has been successful during a HARQ retransmission for a UL data burst in the persistent allocation, a UL PA A-MAP IE can be retransmitted, resulting in addressing the false alarm problem likely to happen in a base station.

### BRIEF DESCRIPTION OF THE DRAWINGS

FIG. 1 is a view showing a typical procedure of error handling for an uplink persistent allocation;
FIG. 2A is a view showing an example of determining that a terminal has received a UL PA A-MAP when a base station detects an uplink data burst in a region indicated by the UL PA A-MAP;
FIG. 2B is a view showing an example of retransmitting the UL PA A-MAP when the base station fails to detect a UL burst in the region indicated by the UL PA A-MAP;
FIG. 3 is a view showing an example of erroneously determining that the terminal has received the UL PA A-MAP when the base station receives a UL burst due to an external interference signal in the region indicated by the UL PA A-MAP;
FIG. 4 is a flowchart showing sequential processes of a method for determining by a base station whether or not a terminal has received a UL PA A-MAP in accordance with a first exemplary embodiment;
FIG. 5A is a flowchart showing a procedure of retransmitting the UL PA A-MAP when the base station fails to decode and detect UL burst in a region indicated by the UL PA A-MAP in accordance with the first exemplary embodiment;
FIG. 5B is a flowchart showing a procedure of retransmitting the UL PA A-MAP to the terminal when the base station successfully detects the UL burst due to an external interference in accordance with this specification;
FIG. 5C is a flowchart showing a procedure of receiving a new UL burst by the base station while retransmitting a first UL burst in accordance with another exemplary embodiment;
FIG. 5D is a flowchart showing a procedure of retransmitting the UL PA A-MAP at a third persistent allocation period (timing) when failed to receive the new UL burst in FIG. 5C;
FIG. 5E is a flowchart showing a procedure of retransmitting the UL PA A-MAP at a second persistent allocation period when failed to receive the new UL burst in FIG. 5C;
FIG. 6 is a flowchart showing a typical procedure of allocating a retransmission region when a base station transmits a UL basic assignment A-MAP to a terminal during a HARQ retransmission after transmitting a UL PA MAP to the terminal;
FIG. 7 is a view showing an example that a base station allocates a retransmission region using a UL basic assignment A-MAP when transmitting a UL PA A-MAP in accordance with a second exemplary embodiment;
FIG. 8 is a flowchart showing a procedure of retransmitting the UL PA A-MAP to the terminal when the base station successfully detects a UL burst due to an external interference in accordance with the second exemplary embodiment;
FIG. 9 is a flowchart showing retransmission of a UL PA MAP when a base station fails to receive consecutive UL bursts when a position of a resource for retransmission has changed during a HARQ retransmission in accordance with another exemplary embodiment;
FIG. 10 is a flowchart showing a procedure of retransmitting a DL PA MAP from a base station to a terminal for a downlink persistent allocation in accordance with a third exemplary embodiment; and
FIG. 11 is a block diagram showing an inner configuration of a base station in accordance with one exemplary embodiment.

### MODES FOR CARRYING OUT THE PREFERRED EMBODIMENTS

Embodiments of the present invention will be described below in detail with reference to the accompanying drawings where those components are rendered the same reference number that are the same or are in correspondence, regardless of the figure number, and redundant explanations are omitted. In describing the present invention, if a detailed explanation for a related known function or construction is considered to unnecessarily divert the gist of the present invention, such explanation has been omitted but would be understood by those skilled in the art.

This specification provides an apparatus and method for providing an emergency service in a communication system, for example, a communication system employing Institute of Electrical and Electronics Engineers (IEEE) 802.16 (hereinafter, referred to as 'IEEE 502.16 communication system').

This specification provides an apparatus and method for providing an emergency service in the IEEE 802.16 communication system as one example. However, the apparatus and method for providing the emergency service proposed in this specification may also be applicable to other communication systems in addition to the IEEE 802.16 communication system.

The following embodiments correspond to combinations of elements and features of the present invention in prescribed forms. And, it is able to consider that the respective elements or features are selective unless they are explicitly mentioned. Each of the elements or features can be implemented in a form failing to be combined with other elements or features. Moreover, it is able to implement an embodiment of the present invention by combining elements and/or features together in part. A sequence of operations explained for each embodiment of the present invention can be modified. Some configurations or features of one embodiment can be included in another embodiment or can be substituted for corresponding configurations or features of another embodiment.

In this disclosure, the embodiments of the present invention are described centering on the data transmission/reception relations between a base station and a terminal. In this case, the base station is meaningful as a terminal node of a network which directly performs communication with the terminal. In this disclosure, a specific operation explained as performed by a base station can be performed by an upper node of the base station in some cases.

In particular, in a network constructed with a plurality of network nodes including a base station, it is apparent that various operations performed for communication with a terminal can be performed by a base station or other networks except the base station. In this case, 'base station' can be replaced by such a terminology as a fixed station, a Node B, an eNode B (eNB), an access point and the like. And, 'mobile station (MS)' can be replaced by such a terminology as a terminal, a user equipment (UE), a Mobile station (MS), a mobile subscriber station (MSS), and the like.

Embodiments of the present invention can be implemented using various means. For instance, embodiments of the present invention can be implemented using hardware, firmware, software and/or any combinations thereof.

In the implementation by hardware, a method according to each embodiment of the present invention can be implemented by at least one selected from the group consisting of Application Specific Integrated Circuits (ASICs), Digital Signal Processors (DSPs), Digital Signal Processing Devices (DSPDs), Programmable Logic Devices (PLDs), Field Programmable Gate Arrays (FPGAs), processor, controller, microcontroller, microprocessor and the like.

In case of the implementation by firmware or software, a method according to each embodiment of the present invention can be implemented by modules, procedures, and/or functions for performing the above-explained functions or operations. Software code is stored in a memory unit and is then drivable by a processor. The memory unit is provided within or outside the processor to exchange data with the processor through the various means known to the public.

In the following description, specific terminologies used for embodiments of the present invention are provided to help the understanding of the present invention. And, the use of the specific terminology can be modified into another form within the scope of the technical idea of the present invention.

This specification provides a method for determining whether or not a terminal has received a control message (for example, DL/UL persistent allocation A-MAP) including UL or DL persistent allocation information appropriately using power detection and decoding with respect to a UL or DL data burst, during error handling in a persistent allocation.

### First Exemplary Embodiment

The first exemplary embodiment illustrates a method in which a base station (Base Station; BS) determines whether or not a terminal (Mobile Station; MS) has successfully received a UL persistent allocation A-MAP (hereinafter, 'UL PA MAP') using results of power detection and decoding with respect to a UL data burst (hereinafter, referred to as 'UL burst') in a region indicated by the UL PA MAP in a UL persistent allocation (hereinafter, referred to as 'UL PA').

Hereinafter, description will be given of a method for determining reception or non-reception of a UL PA A-MAP by a base station using power detection and decoding for a UL data burst.

### STEP 1: Power Detection for UL Burst

To reduce unnecessary resource allocation and packet transmission delay time, a base station checks whether or not a UL burst has been transmitted in a resource region indicated by a UL PA MAP after transmission of the UL PA MAP.

When it is determined that the UL burst has been transmitted to a resource region allocated by the UL PA MAP, the base station determines it as the terminal having successfully received the UL PA A-MAP.

Also, when it is determined that the UL burst has not been transmitted to the resource region allocated by the UL PA MAP, the base station determines it as the terminal having lost the UL PA MAP so as to retransmit the UL PA MAP to the terminal.

### STEP 2: UL Burst Decoding

Even if the base station determines that the terminal has successfully received the UL PA MAP according to the power detection for the UL burst, when it fails to decode the UL burst within a Hybrid Automatic Repeat request (HARQ) period (i.e., the maximum number of HARQ retransmissions) with respect to the UL burst, the base station determines it as the terminal having failed to receive the UL PA MAP, thereby retransmitting the UL PA MAP to the terminal.

Upon retransmission of the UL PA MAP, if the terminal has successfully received the UL PA MAP which the base station transmitted previously, the terminal may update information associated with a persistent allocation using information included in the newly received retransmitted UL PA MAP.

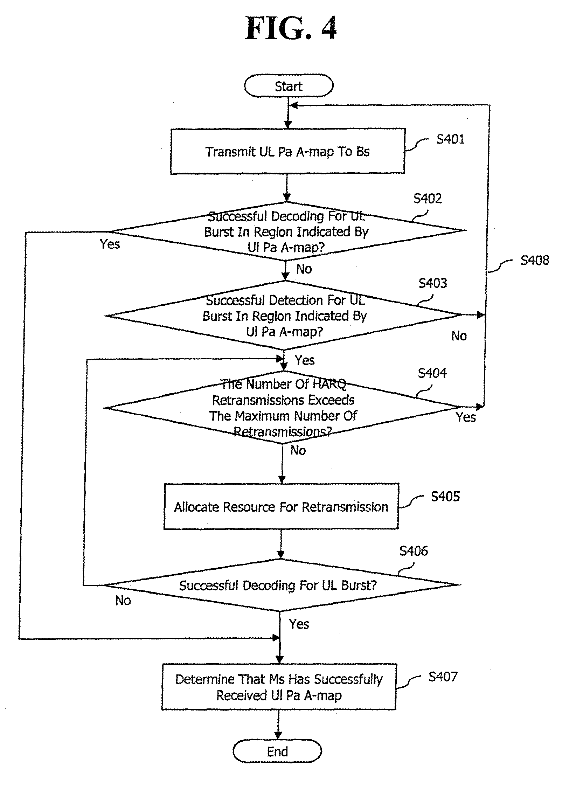

FIG. 4 is a flowchart showing sequential steps of a method in which a base station determines whether or not a terminal has received a UL PA MAP in accordance with a first exemplary embodiment.

First, the base station transmits a control message including persistent allocation information for the terminal to persistently transmit a UL data burst (S401). Here, the control message may be a UL persistent allocation A-MAP IE, for example. Hereinafter, description will be given of an example that the control message is a UL PA MAP message.

Next, the base station performs decoding for a UL data burst in a region indicated by the UL PA MAP transmitted (S402). FIG. 4 exemplarily illustrates the procedure of decoding the first UL burst, but the present disclosure may not be limited thereto.

When it is determined according to the decoding result that the decoding for the UL burst in the region has been successful, the base station determines that the terminal has successfully received the UL PA MAP (S407).

However, when the decoding for the UL burst in the region has failed, the base station detects transmission or non-transmission of a UL burst in the region (S403). That is, the base station carries out power detection for the aforementioned UL burst.

Here, the procedure that the base station detects whether or not the UL data burst has been transmitted may be implemented through comparison between a signal detected in the region and a threshold value having a power level preset in the base station.

When a strength of the signal detected in the region does not exceed the preset threshold value, the base station determines it as the terminal having failed to receive the UL PA MAP transmitted thereto, and accordingly retransmits the transmitted UL PA MAP (S408).

Also, when the detection for the UL burst in the region has been succeeded, namely, when the strength of the signal in the region exceeds the preset threshold value, the base station determines that the terminal has successfully received the UL PA MAP but an error has been generated in a HARQ burst, and accordingly carries out a HARQ retransmission. Here, the base station determines whether or not the number of HARQ retransmissions exceeds the preset maximum number of retransmissions (S404).

If it is determined that the number of HARQ retransmissions exceeds the preset maximum number of retransmissions, the base station determines that the terminal has failed to receive the UL PA MAP, so as to retransmit the UL PA MAP to the terminal (S408).

In this case, when the terminal has received the UL PA MAP previously transmitted by the base station, the terminal may update information related to the persistent allocation based on information included in the retransmitted UL PA MAP.

That is, when the base station has failed to decode the UL burst during the HARQ retransmission period, namely, until the maximum number of HARQ retransmissions for the UL burst, the base station determines that the terminal has failed to receive the transmitted UL PA MAP, so as to retransmit the UL PA MAP to the terminal.

However, if it is determined that the number of HARQ retransmissions does not exceed the maximum number of retransmissions, the base station allocates a resource for retransmission of UL burst to the terminal (S405).

Next, the base station checks whether or not the decoding for the UL burst transmitted by the terminal has been successful in the allocated resource (S406).

If it is checked that the decoding for the UL burst has been successful in the resource allocated for retransmission, the base station determines that the terminal has successfully received the UL PA MAP (S407). Accordingly, the base station performs the persistent allocation for the next UL data burst to the terminal based on information included in the control message (for example, according to a persistent allocation period included in the UL PA MAP).

However, if it is checked that the decoding for the UL burst has failed, the base station repeats the resource allocation for the retransmission until the number of HARQ retransmissions exceeds the maximum number of retransmissions (S409).

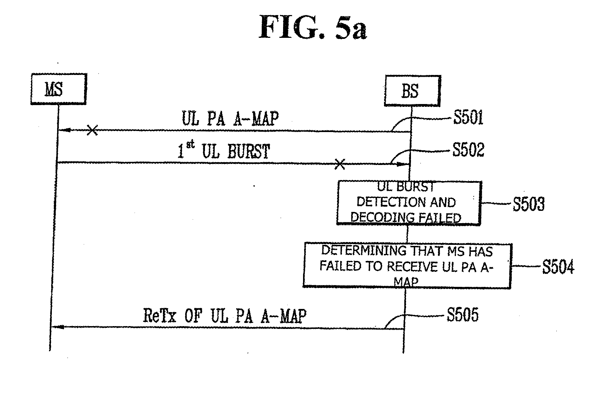

FIG. 5A is a flowchart showing a procedure of retransmitting the UL PA MAP by the base station when both decoding and detection for the UL burst in the region indicated by the UL PA MAP fail in accordance with the first exemplary embodiment.

First, the base station transmits a UL PA MAP message for allocating a UL persistent resource to the terminal.

However, it is likely to occur several erroneous cases, such as the terminal failing to receive the UL PA MAP transmitted by the base station due to the loss of the UL PA MAP on a wired or wireless line, or even if received, the terminal being unable to correctly recognize the UL PA MAP due to an error generated in the UL PA MAP. Hereinafter, it is assumed that the terminal has failed to receive the UL PA MAP (S501).

That is, since the terminal has failed to receive the UL PA MAP, the terminal is unable to transmit a UL burst to a resource region allocated by the base station (S502).

Hence, the base station does not detect transmission of the first UL burst in the resource region indicated by the UL PA MAP transmitted to the terminal, namely, fails to detect the UL burst (S503). A HARQ process for the first UL burst is performed, and decoding for the first UL burst may be failed during a HARQ retransmission period. In this case, the base station determines that the terminal has failed to receive the UL PA MAP (S504).

Consequently, the base station retransmits the UL PA A-MAP for the UL persistent resource allocation to the terminal (S505).

Here, the UL PA MAP may be retransmitted immediately after the end of the HARQ retransmission for the UL burst, at a persistent allocation period after the end of the retransmission, or at the following persistent allocation period.

When the decoding for the retransmitted UL PA MAP has been successful, namely, when the terminal has successfully received the UL PA MAP, the base station may receive the UL burst in the region indicated by the UL PA MAP.

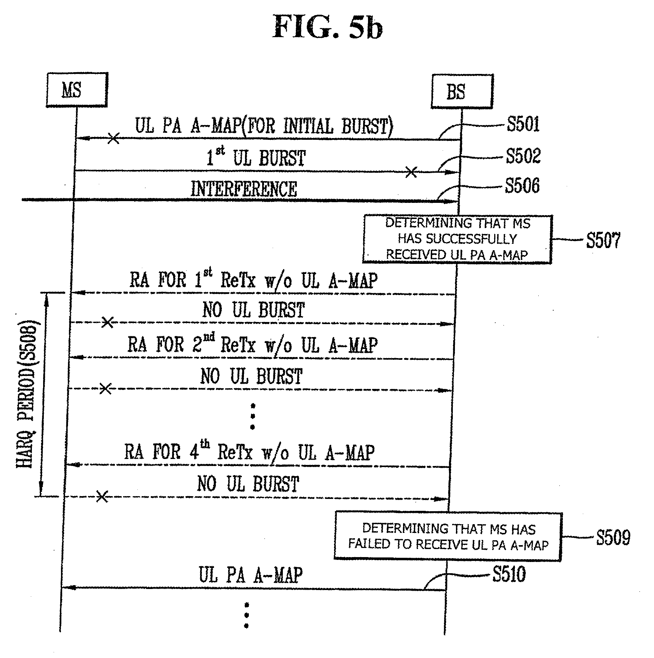

FIG. 5B is a flowchart showing a procedure of retransmitting the UL PA A-MAP to the terminal when the base station successfully detects for a UL burst due to an external interference.

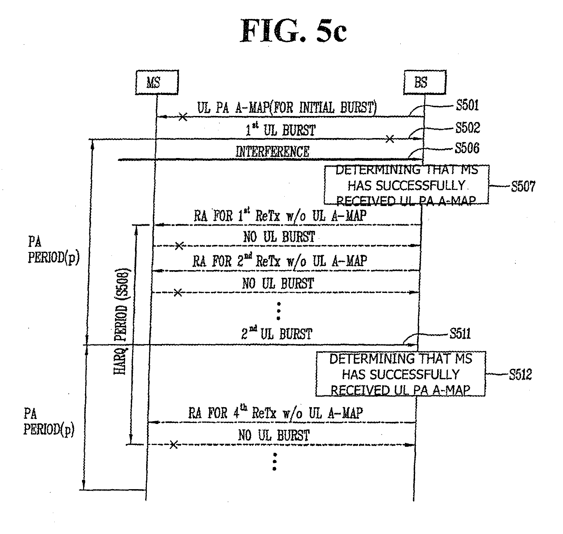

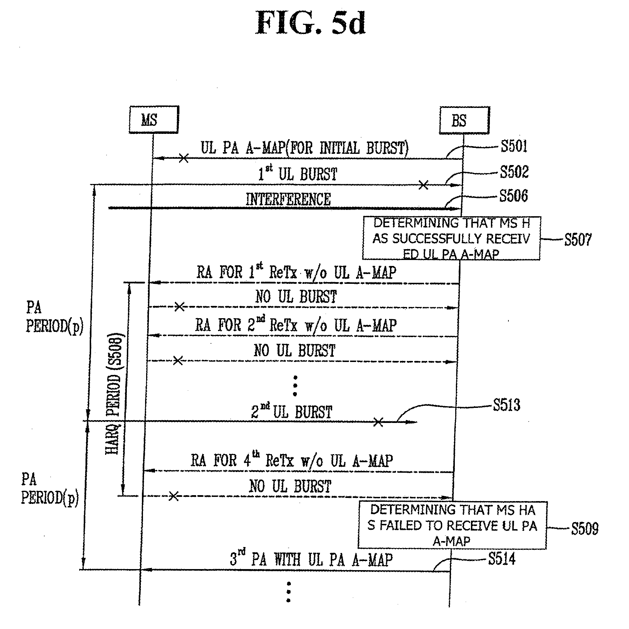

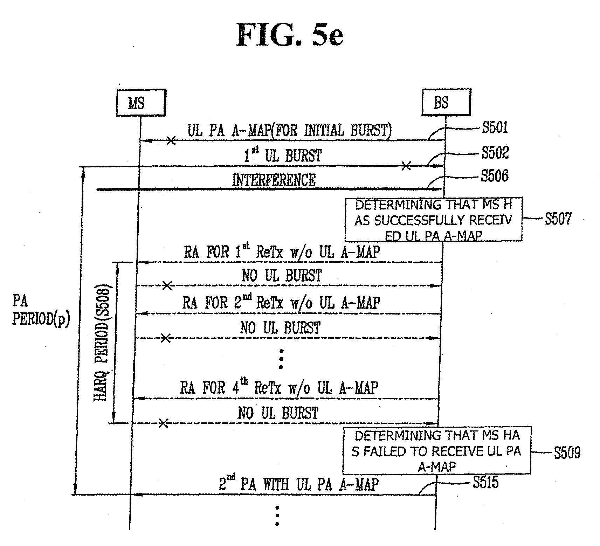

Steps S501 and S502 are the same as those of FIG. 5, so description thereof will not be repeated.

It is assumed that the base station has successfully performed detection for a UL burst due to an external interference in the region indicated by the UL PA MAP transmitted to the terminal (S506).

In this case, since the detection for a UL burst in the region has been successful but the UL burst is not by the terminal but by the external interference, the base station fails to decode the UL burst. Here, since the base station has successfully detected the UL burst in the region indicated by the UL PA MAP, the base station first determines that the terminal has successfully received the UL PA MAP (S507), and accordingly performs a HARQ retransmission for the UL burst (S508).

During the HARQ retransmission, if a resource allocation region for retransmission is preoccupied by another terminal or the like, the base station may change a position of the resource allocation region to perform the retransmission process. Here, the base station may transmit a UL basic assignment MAP message to the terminal. However, it is assumed hereinafter that a position of a resource region has not changed during the retransmission process.

That is, the base station does not determine that the terminal has successfully received the UL PA MAP until before the end of the HARQ retransmission period for the UL burst.

Also, the HARQ retransmission period may change depending on implementation of a system or a service characteristic. FIG. 5B illustrates that the HARQ retransmission period, namely, the maximum number of retransmissions is 4.

Afterwards, when the base station fails to decode the UL burst even after the end of the HARQ retransmission period, the base station determines that the terminal has failed to receive the UL PA MAP (S509), thereby retransmitting the UL PA MAP message to the terminal (S510). Here, the UL PA MAP may be transmitted immediately after the end of the HARQ retransmission or at the following persistent allocation period.

FIG. 5C is a flowchart showing a procedure of receiving a new UL burst during retransmission for a first UL burst in a base station in accordance with another one exemplary embodiment.

Referring to FIG. 5C, while the base station performs a HARQ retransmission for the first UL burst, namely, until the number of HARQ transmissions for the first UL burst exceeds the maximum number of transmissions, if a new (not-retransmitted) UL burst is received without retransmission of the UL PA MAP (S511), the base station determines that the terminal has successfully received the UL PA MAP (S512). When the new UL burst is received, it indicates a successful decoding for the UL burst.

FIG. 5D is a flowchart showing a procedure of retransmitting the UL PA A-MAP at a third persistent allocation period when a new UL burst has not been received in FIG. 5C.

As shown in FIG. 5D, when a new (not-retransmitted) UL burst is not received until the number of HARQ transmissions for the first UL burst exceeds the maximum number of transmissions (S513), the base station retransmits the UL PA MAP to the terminal at the next persistent allocation period.

FIG. 5D illustrates that a HARQ period is longer than a persistent allocation period. Hence, since a new UL burst (second UL burst) cannot be decoded at the second persistent allocation period during the HARQ period, the base station retransmits the UL PA MAP to the terminal at the third persistent allocation period (S514).

FIG. 5E is a flowchart showing a procedure of retransmitting the UL PA A-MAP at a second persistent allocation period when a new UL burst has not been received in FIG. 5C.

FIG. 5E illustrates that a HARQ period is longer than a persistent allocation period. Hence, a new UL burst is not decoded within the HARQ period, so the base station retransmits the UL PA MAP to the terminal at the second persistent allocation period (S515).

### Second Exemplary Embodiment

The second exemplary embodiment illustrates a method in which a base station allocates a retransmission region by first transmitting an Uplink Persistent Allocation Advanced-MAP (hereinafter, referred to as 'UL PA MAP'), and thereafter transmitting a UL Basic Assignment A-MAP (hereinafter, referred to as 'UL BA MAP') during the HARQ retransmission when decoding for a UL burst has failed.

In the UL persistent allocation method, when the HARQ retransmission is carried out due to failure of the decoding for the UL burst, a resource for a UL retransmission by the HARQ is generally allocated with the same position and size as an (HARQ timing) initial transmission after a predetermined sub frame following the resource allocation for the initial transmission.

However, if an allocation region for retransmission is preoccupied by another terminal or the like (for example, persistent allocation), the base station may transmit a UL basic assignment A-MAP to the terminal to change a position.

Hereinafter, description will be given in detail of a method in which a base station determines whether or not a terminal has received a UL PA MAP when transmitting a UL BA MAP during the HARQ retransmission.

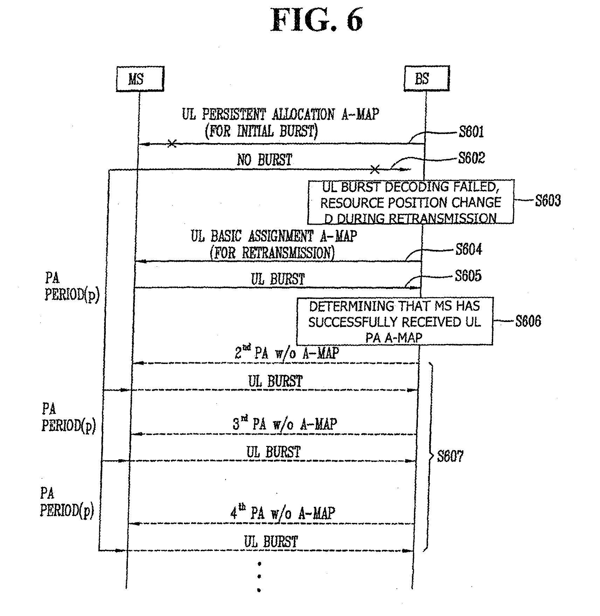

FIG. 6 is a flowchart showing a typical procedure of a method for allocating a retransmission region when a base station transmits a UL BA MAP during a HARQ retransmission after transmitting a UL PA MAP.

Steps S601 and S602 are the same as steps S501 and S502, so description thereof will not be repeated.

The base station performs a HARQ retransmission when failed to decode a UL burst in a region indicated by the UL PA MAP.

During the HARQ retransmission, when a resource region to be allocated to the terminal is preoccupied by another terminal or the like or it is necessary to change a resource region for retransmission due to other reasons (S603), the base station transmits a UL basic assignment A-MAP including information related to the change to the terminal (S604).

When the decoding for the UL burst in the changed region has been successful (S605), the base station then determines that the terminal has successfully received the previously transmitted UL PA MAP ((S606). Accordingly, the base station performs a persistent allocation for the next UL data packet according to the information included in the UL PA MAP (S607).

However, in such case, since the terminal has been allocated with a persistent region via the UL basic assignment A-MAP, the terminal is able to retransmit the UL burst through the reallocated retransmission resource region even if failed to receive the UL PA MAP.

Under this situation, the terminal which failed to receive the UL PA MAP has a problem of being unable to transmit the UL burst to the resource allocated by the base station. This causes a problem that the base station allocates an unnecessary UL resource.

Hereinafter, description will be given in detail of a solution for a case where the base station erroneously determines that the terminal has received the UL PA A-MAP upon the transmission of the UL basic assignment A-MAP.

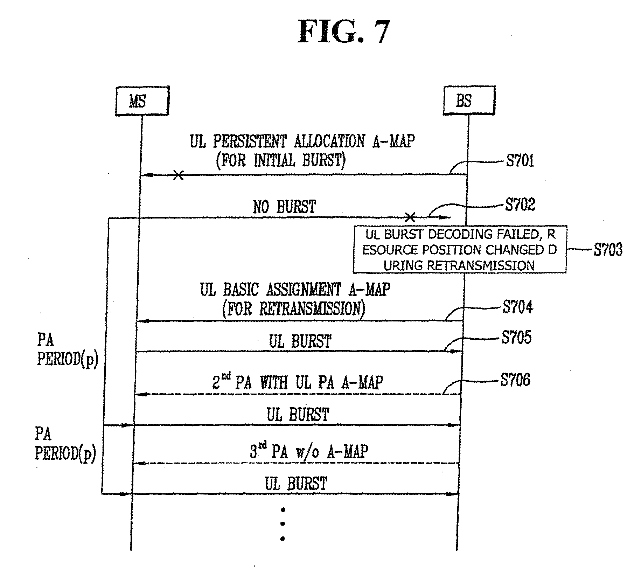

FIG. 7 shows an example that a base station allocates a retransmission region by using the UL basic assignment A-MAP when transmitting the UL PA A-MAP in accordance with a second exemplary embodiment.

Steps S701 to S705 are the same as the steps S601 to S605. Hence, description thereof will be given of different parts except for the same configurations.

As shown in FIG. 7, when the decoding for the UL burst in the region indicated by the UL BA MAP is successful, the base station is unable to correctly determine whether or not the terminal has successfully received the UL PA MAP. Hence, the base station retransmits the UL PA MAP to the terminal at a persistent allocation timing for the next UL burst transmission (for example, at a allocation timing for a second UL burst when receiving the first UL burst through the UL BA MAP) (S706).

Referring to FIG. 7, the UL PA MAP retransmission timing (period) of the base station is the second persistent allocation timing, but without being limited to that, the base station may alternatively retransmit the UL PA MAP to the terminal at a third or fourth persistent allocation timing.

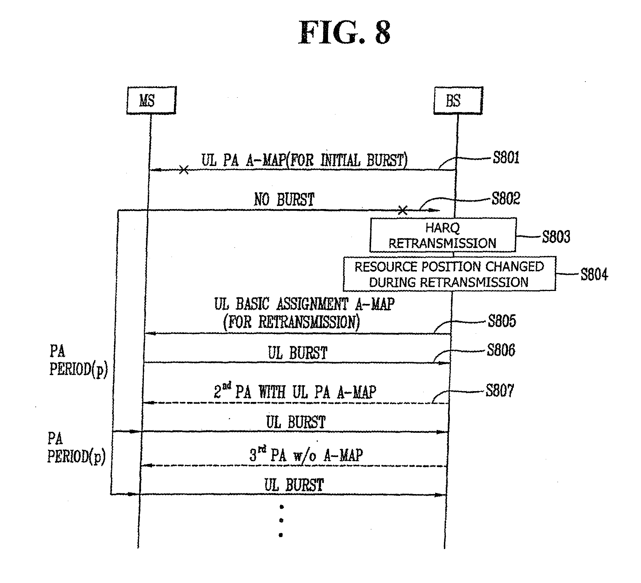

FIG. 8 is a flowchart showing a procedure of the base station retransmitting the UL PA MAP to the terminal when detection for a UL burst is successful due to an external interference.

Steps S801 and S802 are the same as steps S701 and S702, so description thereof will not be repeated.

It is assumed that the base station has succeeded detection for UL burst, due to an external interference, in the region indicated by the UL PA MAP transmitted to the terminal.

Here, the detection for the UL burst in the region has been successful but the UL burst is not by the terminal but by the external interference, so decoding is failed (S803). Hence, the base station performs the HARQ retransmission process for the UL burst.

During the HARQ retransmission process, when the resource allocation region for retransmission is preoccupied by another terminal or the like, a position of the resource allocation region may change to perform the retransmission. Here, the base station transmits a UL basic assignment A-MAP to the terminal. Hereinafter, it is assumed that a position of a resource region has changed during retransmission.

During the HARQ retransmission, when a position of a resource for retransmission has changed (S804), the base station transmits a UL BA MAP to the terminal to inform of the changed information (S805).

When the decoding for the UL burst in the region indicated by the UL BA MAP has been successful (S806), since the base station is unable to determine whether the terminal has successfully received the UL PA MAP, it retransmits the UL PA MAP to the terminal at the next persistent allocation period (S807).

Referring to FIG. 8, when receiving a UL burst from the terminal after transmission of the UL basic A-MAP to the terminal, the base station retransmits the UL PA MAP to the terminal at a second persistent allocation period.

In another exemplary embodiment, after transmission of the UL PA MAP to the terminal, the base station has failed to decode the UL burst in the region indicated by the UL PA MAP, and accordingly performs the HARQ retransmission for the UL burst.

During the HARQ retransmission, even if a position change occurs in the resource region for the UL burst retransmission, the base station does not transmit the UL BA MAP to the terminal. That is, the base station may not change a position of a resource region for a UL data packet allocated through the UL PA MAP.

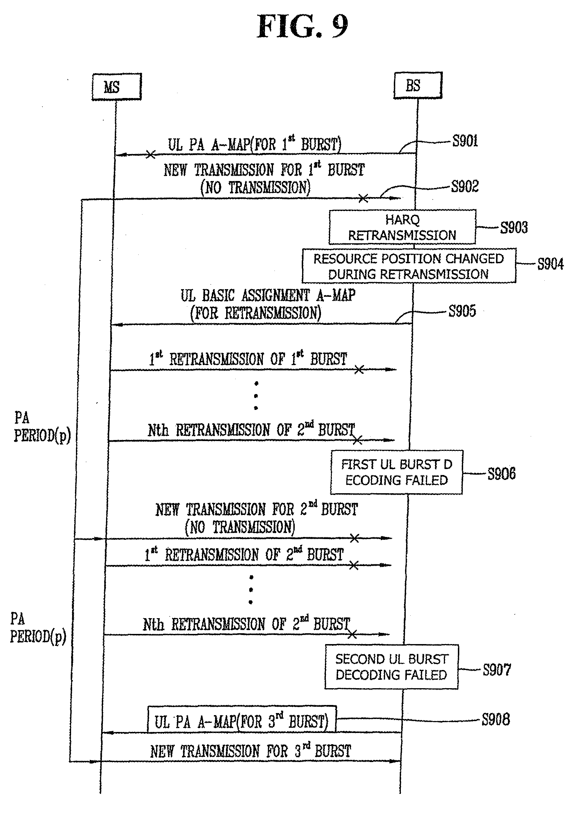

FIG. 9 is a flowchart showing a method in which a base station retransmits a UL PA MAP when failed to receive consecutive UL bursts when a position of a resource for retransmission has changed during a HARQ retransmission process.

Steps S901 to S905 are the same as the steps S801 to S805. Hence, description thereof will be given of different parts except for the same configuration.

When failed to receive N consecutive UL bursts from the terminal in the region indicated by the UL PA MAP or UL BA MAP, the base station determines that the terminal has failed to receive the UL PA MAP, and accordingly retransmits the UL PA MAP to the terminal at the following persistent allocation period.

Here, each burst transmission may be performed while the HARQ retransmission is in progress. The value N may be set to a global variable, or transmitted to the terminal via a system information transfer message (for example, SFH IEs, SCD message, other broadcast messages, etc.)

Referring to FIG. 9, when failed to receive two consecutive UL PA bursts from the terminal, the base station may determine that the terminal has failed to receive the UL PA MAP, and then retransmit the UL PA MAP at the following PA period.

That is, when failed to decode the first and second UL bursts (S906, S907), the base station retransmits the UL PA MAP to the terminal at the moment of the third UL burst being transmitted (S908).

However, when the HARQ retransmission is terminated after the third UL burst transmission starts, the base station retransmits the UL PA MAP to the terminal at the moment of the fourth UL burst being transmitted.

The procedure may be applied to the moment that the persistent allocation is being performed between the base station and the terminal. That is, while the persistent allocation is in progress between the base station and the terminal, when an error for the UL burst is generated in the N^{th} and N+1^{th} persistent allocation, namely, the decoding for the UL burst is failed, the base station may retransmit the UL PA MAP to the terminal at the N+2^{th} persistent allocation period.

### Third Exemplary Embodiment

The third exemplary embodiment illustrates a method in which after transmitting a Downlink Persistent Allocation Advanced-MAP (hereinafter, referred to as 'DL PA MAP') and a Downlink Data Burst (hereinafter, referred to as 'DL Burst') to a terminal, if failed to receive an acknowledgement (ACK) signal for the DL burst, a base station allocates a retransmission region by transmitting a Downlink Basic Assignment A-MAP (hereinafter, referred to as 'DL BA MAP').

In a UL PA, a UL HARQ retransmission process is generally synchronous. After transmission of a first UL PA MAP, a resource for a UL burst transmission is allocated at the same position as a previous sub-packet transmission at a defined timing without transmission of a UL PA MAP.

The base station transmits a UL BA MAP to the terminal only when a position or size of the allocated resource region has changed.

However, for a DL PA, during the HARQ retransmission, the base station transmits DL BA MAP to the terminal for a resource allocation for retransmission, regardless of the change in the position or size of the retransmission region. Consequently, DL persistent allocation errors may occur more than in the uplink HARQ retransmission.

Therefore, to address such problem, the UL PA error handling as aforementioned will be applied in a similar manner. Hereinafter, DL PA error handling will be described in more detail.

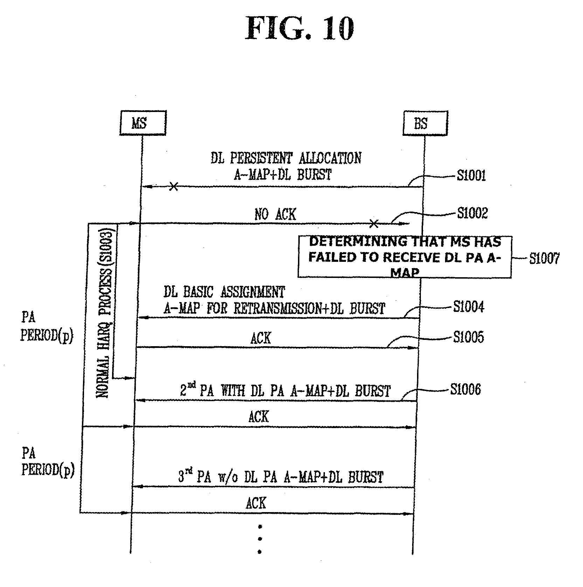

FIG. 10 is a flowchart showing a procedure of retransmitting a DL PA MAP from a base station to a terminal, in case of a DL persistent allocation, in accordance with a third exemplary embodiment.

First, the base station transmits a DL PA MAP for a DL persistent allocation to the terminal. Also, the base station transmits a DL burst to the terminal in a region indicated by the DL PA MAP (S1001).

However, it is likely to occur several erroneous cases, such as the terminal failing to receive the DL PA MAP transmitted by the base station due to the loss of the DL PA MAP on a wired or wireless downlink, or even if received, the terminal being unable to correctly recognize the DL PA MAP due to an error generated in the DL PA MAP. Hereinafter, it is assumed that the terminal has failed to receive the DL PA MAP.

When failed to receive an acknowledgement (ACK) signal in response to the DL burst from the terminal, namely, when failed to receive the ACK for the DL burst in the region indicated by the DL PA MAP (S1002), the base station determines that the terminal has failed to receive the DL PA MAP (S1007).

Here, the base station performs a HARQ retransmission process when failed to receive the ACK signal for the DL burst (S1003).

During the HARQ retransmission process, the base station informs the terminal of a resource allocation region for retransmission by transmitting a DL basic assignment A-MAP IE to the terminal, and transmits a DL burst to the terminal in the resource allocation region for the retransmission (S1004).

Even though the base station has received the ACK for the DL burst through the HARQ retransmission process (S1005), when failed to receive an ACK for a first DL HARQ burst within the HARQ process (namely, until the maximum number of retransmissions for a first DL burst), the base station retransmits the DL PA MAP to the terminal at the following persistent allocation period (S1006).

As one example, when failed to receive an ACK for the first DL HARQ burst with respect to the second DL PA from the terminal, the base station retransmits the DL PA MAP to the terminal at the third DL PA allocation period.

Referring to FIG. 10, it can be seen that the base station retransmits the DL PA MAP to the terminal at the second persistent allocation period, and successfully receives the ACK for the DL burst.

That is, the base station determines that the terminal has successfully received the DL PA MAP only when it has successfully received a first UL ACK for the DL burst transmitted using the first persistent resource allocated through the DL PA MAP. If failed to receive the first UL ACK for the DL burst transmitted using the first persistent resource allocated through the DL PA MAP, the base station determines that the terminal has failed to receive the DL PA MAP irrespective of success or failure of the UL ACK reception for the DL burst retransmission. Here, the base station retransmits the DL PA MAP to the terminal at the next persistent allocation period.

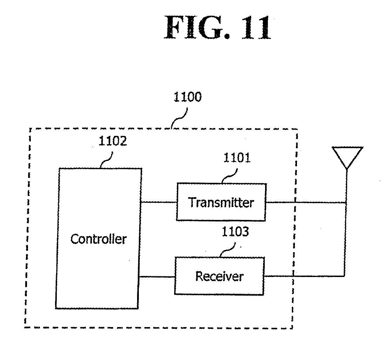

FIG. 11 is a block diagram showing an inner structure of a base station in accordance with one exemplary embodiment.

First, the base station 1100 may include a transmitting unit 1101, a controller 1102 and a receiving unit 1102.

The transmitting unit 1101 may transmit a control message including persistent allocation information to a terminal. Here, the control message may be a DL/UL PA A-MAP IE. That is, the transmitting unit may transmit the UL PA A-MAP message, which includes persistent allocation information for the terminal to transmit a UL data burst, to the terminal. Also, the transmitting unit may transmit to the terminal the DL PA A-MAP message for a DL data burst transmission a DL burst through a region indicated by the MAP.

The controller 1102 may receive the UL burst from the terminal or another terminal, which belongs to the same or different base station, in the region indicated by the UL PA MAP transmitted via the transmitting unit. The controller 1102 may perform at least one of decoding and detection for the received UL burst so as to determine whether the terminal has successfully received the UL PA MAP.

When it is determined that the terminal has successfully received the UL PA MAP, the controller 1102 may perform a persistent allocation using information included in the UL PA MAP transmitted to the terminal.

Here, cases that the reception of the UL PA MAP by the terminal is determined as succeeded may include a case where decoding for the UL burst has been successful, and a case where the decoding for the UL burst has been failed but decoding for the UL burst has been succeeded during the HARQ retransmission by virtue of success of detection for the UL burst.

Also, when it is determined that the terminal has failed to receive the UL PA MAP, the controller 1102 may retransmit the UL PA MAP to the terminal. Here, a case that the reception of the UL PA MAP by the terminal is determined as failed may be a case that the decoding for the UL burst is failed. Especially, the reception failure case may include failure of both decoding and detection for the UL burst, failure of decoding for the UL burst as a result of a HARQ retransmission of the base station even if the detection has been successful, or success of decoding for the UL burst in a region indicated by the UL PA MAP by transmitting a UL basic assignment A-MAP to the terminal.

The receiving unit 1103 may receive the UL burst from the terminal or another terminal in the region indicated by the UL PA MAP.

## Claims

1. An operating method of a base station for error handling in persistent allocation, the method comprising:
transmitting, to a terminal, a first control message including persistent allocation information for allowing the terminal to transmit an uplink data burst;
decoding the uplink data burst in a resource region allocated through the first control message; and
determining whether the terminal receives the first control message on the basis of the decoding result.

2. The method of claim 1, further comprising
performing a detection for the uplink data burst in the resource region allocated through the first control message when the decoding has failed.

3. The method of claim 2, further comprising
retransmitting the first control message to the terminal, by determining that the terminal has failed to receive the first control message, upon failure of the detection.

4. The method of claim 2, further comprising
performing a Hybrid Automatic Repeat reQuest (HARQ) retransmission process for the uplink data burst when the detection is successful.

5. The method of claim 4, further comprising
determining that the terminal has failed to receive the first control message when the number of HARQ retransmissions exceeds the maximum number of retransmissions, and
retransmitting the first control message to the terminal.

6. The method of claim 4, wherein it is determined that the terminal has received the first control message when the decoding for the uplink data burst is successful during the HARQ retransmission process without transmitting a second control message to the terminal, the second control message including information related to the change in a resource region for retransmission.

7. The method of claim 1, further comprising performing a HARQ retransmission process for the uplink data burst when the decoding fails.

8. The method of claim 4 or 7, further comprising
transmitting the second control message including information related to a changed resource allocation region to the terminal when the resource allocation region for retransmission of the uplink data burst changes during the HARQ retransmission process.

9. The method of claim 8, further comprising retransmitting the first control message to the terminal when the decoding for the uplink data burst is successful in the changed resource allocation region.

10. The method of claim 9, wherein the retransmitted first control message is retransmitted to the terminal at a timing of allocating a resource for the terminal to transmit the next uplink data burst.

11. The method of claim 1, further comprising determining that the terminal has failed to receive the first control message when decoding for first and second uplink data bursts all fails in the resource region allocated through the first control message, and retransmitting the first control message to the terminal at a timing of transmitting a third uplink data burst.

12. The method of claim 2, wherein the detection step is performed to compare a preset threshold value with a strength of a signal received in the allocated resource region and determine whether or not the uplink data burst has been transmitted to the allocated resource region.

13. The method of claim 1, wherein the first control message is an uplink persistent allocation A-MAP IE.

14. The method of claim 6, wherein the second control message is an uplink basic assignment A-MAP IE.

15. An operating method of a base station for error handling in a persistent allocation, the method comprising:
transmitting a first control message to a terminal, the first control message including persistent allocation information for allowing the terminal to receive a downlink data burst;
transmitting the downlink data burst to the terminal using the resource allocated through the first control message; and
determining that the terminal has failed to receive the transmitted first control message when an ACK for the transmitted downlink data burst is not received, and retransmitting the first control message to the terminal at the next downlink persistent allocation period.

16. The method of claim 15, wherein the first control message is an uplink persistent allocation A-MAP IE.

17. An operating method of a terminal for error handling in a persistent allocation, the method comprising:
Receiving, from a base station, a first control message for transmitting an uplink data burst, the first control message including persistent allocation region information;
re-receiving the first control message from the base station; and
updating the persistent allocation region information included in the previously received first control message, using the re-received first control message.
